# EUROPEAN PATENT APPLICATION

(11) **EP 4 478 520 A1**
(43) Date of publication of application: **18.12.2024**
(21) Application number: 23907703.5
(22) Date of filing: 20.12.2023
(51) Int. Cl.: H01M 50/519, H01M 50/211, H01M 50/204

(54) **BATTERY ASSEMBLY**

(30) Priority: 20.12.2022 KR 20220179170; 17.03.2023 KR 20230035250
(71) Applicant: LG Energy Solution, Ltd., Seoul 07335 (KR)
(72) Inventor: KIM, Min Bum, Daejeon 34122 (KR); JEON, Jong Pil, Daejeon 34122 (KR); LEE, Hyoung Suk, Daejeon 34122 (KR)
(74) Representative: Plasseraud IP
(86) International application number: PCT/KR2023/021039
(87) International publication number: WO 2024/136420

(57) **Abstract**

A battery assembly may include a cell stack including first to third pouch type battery cells, wherein the first pouch type battery cell includes a first positive electrode lead and a first negative electrode lead, the second pouch type battery cell includes a second positive electrode lead and a second negative electrode lead, and the third pouch type battery cell includes a third positive electrode lead and a third negative electrode lead, and a first bus bar assembly coupled to the cell stack. Additionally, the first bus bar assembly can include a first bus bar frame, a first bus bar coupled to the first positive electrode lead and configured to output a voltage of the cell stack, a first integrated circuit coupled to the first bus bar frame, and configured to measure electric potentials of the second negative electrode lead and the third positive electrode lead, and a first wire configured to be electrically connected to the first integrated circuit and the third positive electrode lead.

## Description

### [Technical Field]

The present invention relates to a battery assembly. The present application claims the benefit of priority based on Korean Patent Application No. 10-2022-0179170, filed on December 20, 2022, and Korean Patent Application No. 10-2023-0035250, filed on March 17, 2023, and the entire contents of the Korean patent applications are incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. Here, the energy density of a secondary battery is a value obtained by dividing a maximum level of electrical energy that the secondary battery may store by the mass of the secondary battery. A high energy density of the secondary battery is directly related to the driving efficiency and range of mobility, and thus various studies are being conducted to improve the energy density of secondary batteries.

### [Disclosure]

### [Technical Problem]

The present invention is directed to providing a battery assembly with improved energy density.

### [Technical Solution]

To address the above-described problem, according to example embodiments of the present invention, provide is a battery assembly. The battery assembly may include first to third pouch type battery cells, in which the first pouch type battery cell includes a first positive electrode lead and a first negative electrode lead, the second pouch type battery cell includes a second positive electrode lead and a second negative electrode lead, and the third pouch type battery cell includes a third positive electrode lead and a third negative electrode lead, and a first bus bar assembly coupled to the cell stack, and the first bus bar assembly includes a first bus bar frame, a first bus bar coupled to the first positive electrode lead and configured to output a voltage of the cell stack, a first integrated circuit coupled to the first bus bar frame, and configured to measure electric potentials of the second negative electrode lead and the third positive electrode lead, and a first wire configured to be electrically connected to the first integrated circuit and the third positive electrode lead.

The battery assembly may further include a first contact pad on the first integrated circuit, the first contact pad being in contact with the first wire.

The first contact pad may include nickel (Ni).

The first integrated circuit may be in contact with the first wire.

The first wire may be in contact with the third positive electrode lead.

The first positive electrode lead, the second negative electrode lead, and the third positive electrode lead may be on a front surface of the cell stack, and the first bus bar frame may cover the front surface of the cell stack.

The battery assembly may further include a second bus bar assembly coupled to the cell stack. The second bus bar assembly may include a second bus bar frame, a second integrated circuit coupled to the second bus bar frame, and configured to measure electric potentials of the first negative electrode lead and the second positive electrode lead, and a second wire configured to be electrically connected to the second integrated circuit and the second positive electrode lead.

The battery assembly may further include a second contact pad on the second integrated circuit, the second contact pad being in contact with the second wire.

The second integrated circuit may be in contact with the second wire.

The second wire may be in contact with the second positive electrode lead.

The first negative electrode lead, the second positive electrode lead, and the third negative electrode lead may be on a rear surface of the cell stack, and the second bus bar frame may cover the rear surface of the cell stack.

According to example embodiments of the present invention, provide is a battery assembly. The battery assembly may include a cell stack with a plurality of pouch type battery cells, in which each of the plurality of pouch type battery cells includes a positive electrode lead and a negative electrode lead, and a first bus bar assembly coupled to the cell stack, and the first bus bar assembly includes a first bus bar frame, a first integrated circuit coupled to the first bus bar frame and configured to measure an electric potential of one of positive electrode lead and the negative electrode lead of each of the plurality of pouch type battery cells, and a plurality of first wires each configured to electrically connect one of the positive electrode lead and the negative electrode lead of the plurality of pouch type battery cells to the first integrated circuit.

The battery assembly may further include a plurality of first contact pads on the first integrated circuit, the plurality of first contact pads being in contact with the plurality of first wires.

The first integrated circuit may be in contact with the plurality of first wires.

Each of the plurality of first wires may be in contact with the positive electrode lead of one of the plurality of pouch type battery cells.

### [Advantageous Effects]

In a battery assembly according to example embodiments of the present invention, a module frame is not included, and a bus bar configured to measure electric potentials of a plurality of nodes in the battery assembly is replaced with a wire. Accordingly, the energy density of the battery assembly can be improved.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view of a battery assembly according to example embodiments of the present invention.
FIG. 2 is an exploded perspective view of a battery assembly according to example embodiments of the present invention.
FIG. 3 is a perspective view of an assembly including some components of a battery assembly.
FIG. 4 is a front view of the assembly of FIG. 3.
FIG. 5 is a partially enlarged front view of a part of FIG. 4.
FIG. 6 is a rear view of the assembly of FIG. 3.
FIG. 7 illustrates a part corresponding to FIG. 5.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

Therefore, embodiments set forth herein and configurations illustrated in the drawings are only embodiments of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

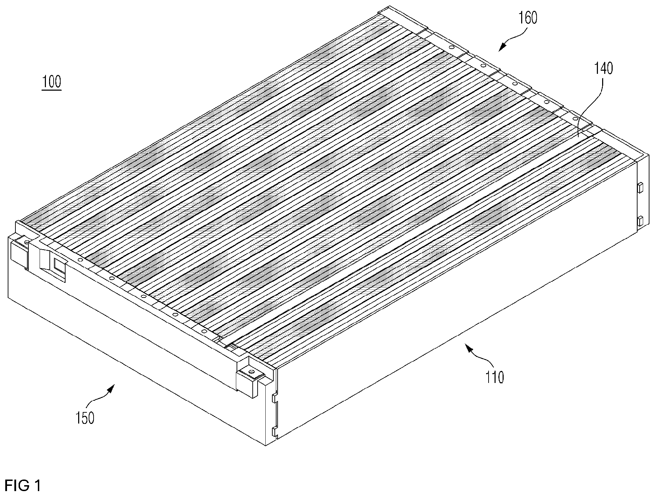

FIG. 1 is a perspective view of a battery assembly according to example embodiments.

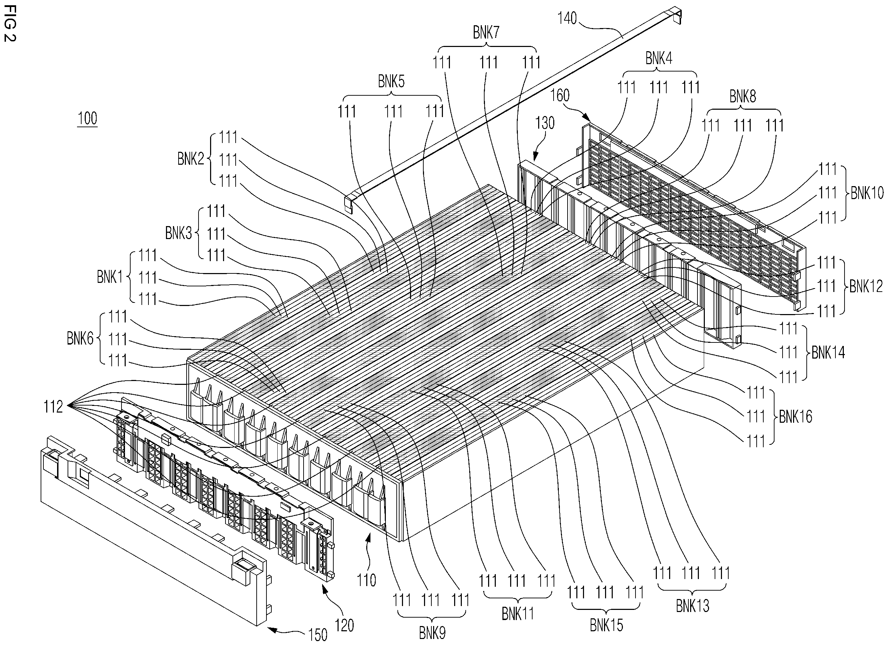

FIG. 2 is an exploded perspective view of the battery assembly according to example embodiments.

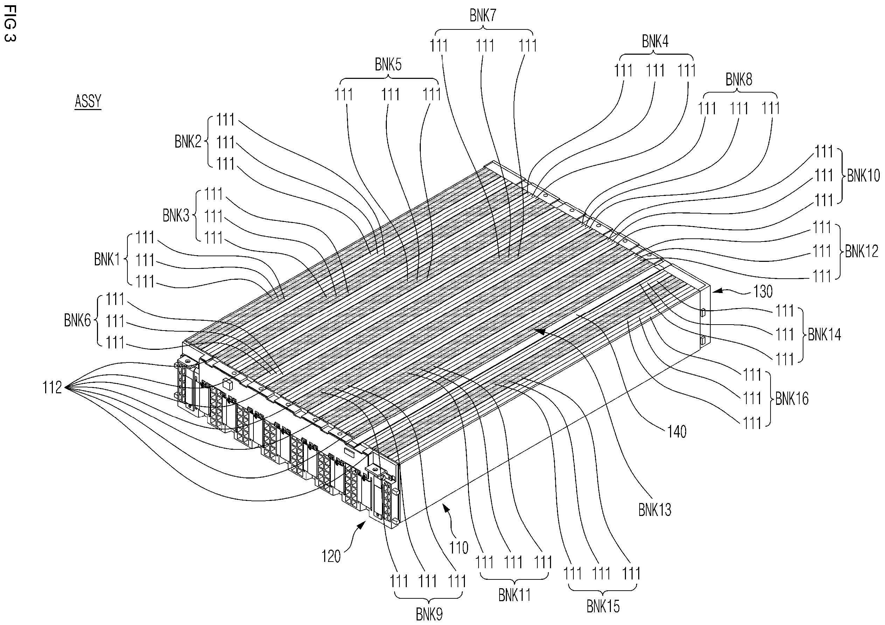

FIG. 3 is a perspective view of an assembly ASSY including some components of a battery assembly 100.More specifically, the assembly ASSY includes a cell stack 110, a first bus bar assembly 120, a second bus bar assembly 130, and a flat flexible cable (FFC) assembly 140.

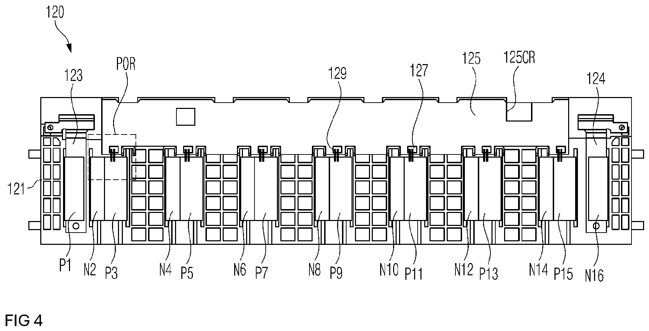

FIG. 4 is a front view of the assembly ASSY of FIG. 3.

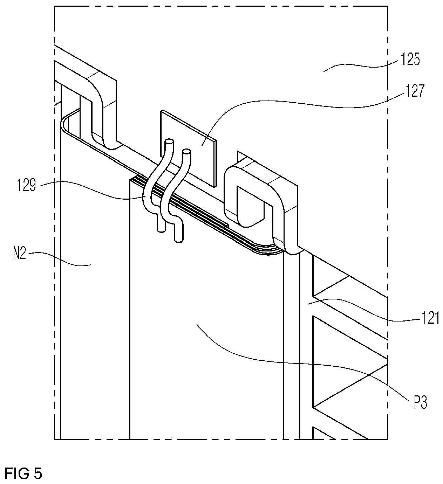

FIG. 5 is a partially enlarged front view of a part POR of FIG. 4.

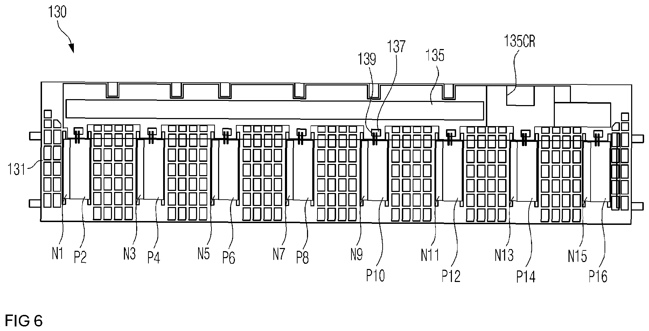

FIG. 6 is a rear view of the assembly ASSY of FIG. 3.

Referring to FIGS. 1 to 6, the battery assembly 100 may include the cell stack 110, the first bus bar assembly 120, the second bus bar assembly 130, the FFC assembly 140, a first insulation cover 150, and a second insulating cover 160.

The cell stack 110 may include first to sixteenth battery banks BNK1, BNK2, BNK3, BNK4, BNK5, BNK6, BNK7, BNK8, BNK9, BNK10, BNK11, BNK12, BNK13, BNK14, BNK15, and BNK16.Each of the first to sixteenth battery banks BNK1 to BNK16 may include a plurality of pouch type battery cells (e.g., three pouch type battery cells) 11 1.Each of the pouch type battery cells 111 may be a bidirectional cell. That is, positive electrode leads P1, P2, P3, P4, P5, P6, P7, P8, P9, P10, P11, P12, P13, P14, P15, and P16 of the pouch type battery cells 111 may be on one end of each of the pouch type battery cells 111, and negative electrode leads N1, N2, N3, N4, N5, N6, N7, N8, N9, N10, N11, N12, N13, N14, N15, and N16 thereof may be on a side of each of the pouch type battery cells 111 opposite to the positive electrode leads P1, P2, P3, P4, P5, P6, P7, P8, P9, P10, P11, P12, P13, P14, P15, and P16.Hereinafter, an embodiment of the battery assembly 100 including 16 battery banks (i.e., 48 pouch type battery cells 111) will be described, and the number of battery banks may be changed according to the design of the battery assembly 100.

Each of the pouch type battery cells 111 of the first battery bank BNK1 may be referred to as a first pouch type battery cell. Each of the pouch type battery cells 111 of the second battery bank BNK2 may be referred to as a second pouch type battery cell. Each of the pouch type battery cells 111 of the third battery bank BNK3 may be referred to as a third pouch type battery cell. Each of the pouch type battery cells 111 of the fourth battery bank BNK4 may be referred to as a fourth pouch type battery cell. Each of the pouch type battery cells 111 of the fifth battery bank BNK5 may be referred to as a fifth pouch type battery cell. Each of the pouch type battery cells 111 of the sixth battery bank BNK6 may be referred to as a sixth pouch type battery cell. Each of the pouch type battery cells 111 of the seventh battery bank BNK7 may be referred to as a seventh pouch type battery cell. Each of the pouch type battery cells 111 of the eighth battery bank BNK8 may be referred to as an eighth pouch type battery cell. Each of the pouch type battery cells 111 of the ninth battery bank BNK9 may be referred to as a ninth pouch type battery cell. Each of the pouch type battery cells 111 of the tenth battery bank BNK10 may be referred to as a tenth pouch type battery cell. Each of the pouch type battery cells 111 of the eleventh battery bank BNK11 may be referred to as an eleventh pouch type battery cell. Each of the pouch type battery cells 111 of the twelfth battery bank BNK12 may be referred to as twelfth pouch type battery cells. Each of the pouch type battery cells 111 of the thirteenth battery bank BNK13 may be referred to as a thirteenth pouch type battery cell. Each of the pouch type battery cells 111 of the fourteenth battery bank BNK14 may be referred to as a fourteenth pouch type battery cell. Each of the pouch type battery cells 111 of the fifteenth battery bank BNK15 may be referred to as a fifteenth pouch type battery cell. Each of the pouch type battery cells 111 of the sixteenth battery bank BNK16 may be referred to as a sixteenth pouch type battery cell.

Each of the pouch type battery cells 111 of the first battery bank BNK1 may include a first positive electrode lead P1 and a first negative electrode lead N1. Each of the pouch type battery cells 111 of the second battery bank BNK2 may include a second positive electrode lead P2 and a second negative electrode lead N2. Each of the pouch type battery cells 111 of the third battery bank BNK3 may include a third positive electrode lead P3 and a third negative electrode lead N3. Each of the pouch type battery cells 111 of the fourth battery bank BNK4 may include a fourth positive electrode lead P4 and a fourth negative electrode lead N4. Each of the pouch type battery cells 111 of the fifth battery bank BNK5 may include a fifth positive electrode lead P5 and a fifth negative electrode lead N5. Each of the pouch type battery cells 111 of the sixth battery bank BNK6 may include a sixth positive electrode lead P6 and a sixth negative electrode lead N6. Each of the pouch type battery cells 111 of the seventh battery bank BNK7 may include a seventh positive electrode lead P7 and a seventh negative electrode lead N7. Each of the pouch type battery cells 111 of the eighth battery bank BNK8 may include an eighth positive electrode lead P8 and an eighth negative electrode lead N8. Each of the pouch type battery cells 111 of the ninth battery bank BNK9 may include a ninth positive electrode lead P9 and a ninth negative electrode lead N9. Each of the pouch type battery cells 111 of the tenth battery bank BNK10 may include a tenth positive electrode lead P10 and a tenth negative electrode lead N10. Each of the pouch type battery cells 111 of the eleventh battery bank BNK11 may include an eleventh positive electrode lead P11 and an eleventh negative electrode lead N11. Each of the pouch type battery cells 111 of the twelfth battery bank BNK12 may include a twelfth positive electrode lead P12 and a twelfth negative electrode lead N12. Each of the pouch type battery cells 111 of the thirteenth battery bank BNK13 may include a thirteenth positive electrode lead P13 and a thirteenth negative electrode lead N13. Each of the pouch type battery cells 111 of the fourteenth battery bank BNK 14 may include a fourteenth positive electrode lead P14 and a fourteenth negative electrode lead N14. Each of the pouch type battery cells 111 of the fifteenth battery bank BNK15 may include a fifteenth positive electrode lead P15 and a fifteenth negative electrode lead N15. Each of the pouch type battery cells 111 of the sixteenth battery bank BNK16 may include a sixteenth positive electrode lead P16 and a sixteenth negative electrode lead N16.

Each of the plurality of battery cells 111 is a basic unit of a lithium ion battery, i.e., a secondary battery. Each of the plurality of pouch type battery cells 111 may include a pouch case of aluminum laminate sheet and an electrode assembly included in the pouch case. The electrode assembly included in the pouch case includes a positive electrode, a negative electrode, and a separator interposed between the positive and negative electrodes. The electrode assembly may be classified as a jelly-roll type electrode assembly or a stack type electrode assembly according to a form of assembly. The jelly roll type electrode assembly is manufactured by winding a positive electrode, a negative electrode, and a separator interposed therebetween. The stack type electrode assembly includes a plurality of positive electrodes, a plurality of negative electrodes, and a plurality of separators interposed therebetween that are stacked sequentially.

The pouch type battery cells 111 of the first battery banks BNK1 may be connected to each other in parallel. This is the same for the second to sixteenth battery banks BNK2 to BNK16.The first to sixteenth battery banks BNK1 to BNK16 may be connected to each other in series. Accordingly, the first to sixteenth battery cells may also be connected in series.

More specifically, the first negative electrode leads N1 may be connected to the second positive electrode leads P2, the second negative electrode leads N2 may be connected to the third positive electrode leads P3, the third negative electrode leads N3 may be connected to the fourth positive electrode leads P4, the fourth negative electrode leads N4 may be connected to the fifth positive electrode leads P5, the fifth negative electrode leads N5 may be connected to the sixth positive electrode leads P6, the sixth negative electrode leads N6 may be connected to the seventh positive electrode leads P7, the seventh negative electrode leads N7 may be connected to the eighth positive electrode leads P8, the eighth negative electrode leads N8 may be connected to the ninth positive electrode leads P9, the ninth negative electrode leads N9 may be connected to the tenth positive electrode leads P10, the tenth negative electrode leads N10 may be connected to the eleventh positive electrode leads P11, the eleventh negative electrode leads N11 may be connected to the twelfth positive electrode leads P12, the twelfth negative electrode leads N12 may be connected to the thirteenth positive electrode leads P13, the thirteenth negative electrode leads N13 may be connected to the fourteenth positive electrode leads P14, the fourteenth negative electrode leads N14 may be connected to the fifteenth positive electrode leads P15, and the fifteenth negative electrode leads N15 may be connected to the sixteenth positive electrode leads P16. The above-described connections should be understood to mean physical connections, including electrical connections, and to include indirect connections including an additional element therebetween.

The first positive electrode leads P1 may be welded to a first bus bar 123, the first negative electrode leads N1 may be welded to the second positive electrode leads P2, the second negative electrode leads N2 may be welded to the third positive electrode leads P3, the third negative electrode leads N3 may be welded to the fourth positive electrode leads P4, the fourth negative electrode leads N4 may be welded to the fifth positive electrode leads P5, the fifth negative electrode leads N5 may be welded to the sixth positive electrode leads P6, the sixth negative electrode leads N6 may be welded to the seventh positive electrode leads P7, the seventh negative electrode leads N7 may be welded to the eighth positive electrode leads P8, the eighth negative electrode leads N8 may be welded to the ninth positive electrode leads P9, the ninth negative electrode leads N9 may be welded to the tenth positive electrode leads P10, the tenth negative electrode leads N10 may be welded to the eleventh positive electrode leads P11, the eleventh negative electrode leads N11 may be welded to the twelfth positive electrode leads P12, the twelfth negative electrode leads N12 may be welded to the thirteenth positive electrode leads P13, the thirteenth negative electrode leads N13 may be welded to the fourteenth positive electrode leads P14, the fourteenth negative electrode leads N14 may be welded to the fifteenth positive electrode leads P15, and the fifteenth negative electrode leads N15 may be welded to the sixteenth positive electrode leads P16.

Separators 112 may be interposed between the plurality of pouch type battery cells 111.The separators 112 may support the plurality of battery cells 111 laterally to prevent swelling of the plurality of battery cells 111.According to example embodiments, the separators 112 may include polyurethane. According to other example embodiments, the separators 112 may include a flame-retardant material such as a silicone.

The first bus bar assembly 120 and the second bus bar assembly 130 may be coupled to the cell stack 110.The first bus bar assembly 120 and the second bus bar assembly 130 may be spaced apart from each other with the cell stack 110 interposed therebetween.

The first bus bar assembly 120 may include a first bus bar frame 121, a first bus bar 123, a second bus bar 124, a first integrated circuit 125, a plurality of first contact pads 127, and a plurality of first wires 129.The first bus bar frame 121 may include an insulating material such as plastic. The first bus bar frame 121 may be located on a front surface of the cell stack 110 to be coupled to the cell stack 110.The first bus bar frame 121 may support and fix the first bus bar 123, the second bus bar 124, and the first integrated circuit 125.The first bus bar frame 121 may include a plurality of ribs and an empty space between the plurality of ribs, thus resulting in a reduction in the weight of the first bus bar frame 121.

The first bus bar 123 and the second bus bar 124 may be coupled to the first bus bar frame 121.The first bus bar 123 and the second bus bar 124 may be output terminals for outputting a voltage of the cell stack 110. The first bus bar 123 may be a positive terminal, and the second bus bar 124 may be a negative terminal. The first bus bar 123 may be coupled to the first positive electrode leads P1.The second bus bar 124 may be coupled to the sixteenth negative electrode leads N16. Accordingly, a potential difference between the first bus bar 123 and the second bus bar 124 may be substantially the same as an output voltage of the cell stack 110 (i.e., the sum of output voltages of the first to sixteenth battery banks BNK1 to BNK16).

The first integrated circuit 125 may be coupled to the first bus bar frame 121.The first integrated circuit 125 may be configured to measure voltages of certain nodes of the cell stack 110.The first integrated circuit 125 may be configured to transmit the measured voltage of each of the nodes of the cell stack 110 to a battery management system (BMS).

The nodes sensed by the first integrated circuit 125 include nodes of the first positive electrode leads P1, nodes of the second negative electrode leads N2 and the third positive electrode leads P3, nodes of the fourth negative electrode leads N4 and the fifth positive electrode leads P5, nodes of the sixth negative electrode leads N6 and the seventh positive electrode leads P7, nodes of the eighth negative electrode leads N8 and the ninth positive electrode leads P9, nodes of the tenth negative electrode leads N10 and the eleventh positive electrode leads P11, nodes of the twelfth negative electrode leads N12 and the thirteenth positive electrode leads P13, nodes of the fourteenth negative electrode leads N14 and the fifteenth positive electrode leads P15, and nodes of the sixteenth negative electrode leads N16.

The first integrated circuit 125 may be connected to the above-described nodes through the plurality of first wires 129.The plurality of first wires 129 may be configured to be electrically connected to the first integrated circuit 125.Each of the plurality of first wires 129 may be configured to be electrically connected to corresponding one among the first positive electrode leads P1, the second negative electrode leads N2, the third positive electrode leads P3, the fourth negative electrode leads N4, the fifth positive electrode leads P5, the sixth negative electrode leads N6, the seventh positive electrode leads P7, the eighth negative electrode leads N8, the ninth positive electrode leads P9, the tenth negative electrode leads N10, the eleventh positive electrode leads P11, the twelfth negative electrode leads N12, the thirteenth positive electrode leads P13, the fourteenth positive electrode leads P14, the fifteenth positive electrode leads P15, and the sixteenth negative electrode leads N16.

Each of the plurality of first wires 129 may be configured to electrically connect one of the positive electrode leads P1 to P16 of each of the plurality of battery cells 111 and the negative electrode leads N1 to N16 of each of the plurality of battery cells 111 to the first integrated circuit 125.More specifically, each of the plurality of first wires 129 may be in contact with corresponding one among the first positive electrode leads P1, the third positive electrode leads P3, the fifth positive electrode leads P5, the seventh positive electrode leads P7, the ninth positive electrode leads P9, the eleventh positive electrode leads P11, the thirteenth positive electrode leads P13, and the fifteenth positive electrode leads P15.

Each of the plurality of first wires 129 may be configured to be electrically connected to corresponding one among the plurality of first contact pads 127.Each of the plurality of first contact pads 127 may be on the first integrated circuit 125.Each of the plurality of first contact pads 127 may be connected to a circuit pattern of the first integrated circuit 125.Each of the plurality of first wires 129 may be in contact with corresponding one among the plurality of first contact pads 127.Each of the plurality of first contact pads 127 may include, for example, nickel. Each of the plurality of first contact pads 127 may prevent damage to the first integrated circuit 125 when the plurality of first wires 129 are formed.

In FIG. 5, each of the plurality of first contact pads 127 is connected to two first wires 129 but embodiments are not limited thereto. Each of the plurality of first contact pads 127 may be connected to one first wire 129 or connected to three or more first wires 129.

The first insulation cover 150 may be coupled to the first bus bar frame 121. The first insulation cover 150 may cover the first positive electrode leads P1, the second negative electrode leads N2, the third positive electrode leads P3, the fourth negative electrode leads N4, the fifth positive electrode leads P5, the sixth negative electrode leads N6, the seventh positive electrode leads P7, the eighth negative electrode leads N8, the ninth positive electrode leads P9, the tenth negative electrode leads N10, the eleventh positive electrode leads P11, the twelfth negative electrode leads N12, the thirteenth positive electrode leads P13, the fourteenth negative electrode leads N14, the fifteenth positive electrode leads P15, and the sixteenth negative electrode leads N16 to prevent undesired short circuit between them and an external element. The first insulation cover 150 may include an insulating material.

The second bus bar assembly 130 may include a second bus bar frame 131, a second integrated circuit 135, a plurality of second contact pads 137, and a plurality of second wires 139.The second bus bar frame 131 may include an insulating material such as plastic. The second bus bar frame 131 may be located on a rear surface of the cell stack 110 to be coupled to the cell stack 110. The second bus bar frame 131 may support and fix the second integrated circuit 135.The second bus bar frame 131 may include a plurality of ribs and an empty space between the plurality of ribs, thus resulting in a reduction in the weight of the second bus bar frame 131.

The second integrated circuit 135 may be coupled to the second bus bar frame 131.The second integrated circuit 135 may be configured to measure voltages of certain nodes of the cell stack 110.The voltage of each of the nodes of the cell stack 110 that is measured by the second integrated circuit 135 may be transmitted to the first integrated circuit 125 by the FFC assembly 140.

The nodes sensed by the second integrated circuit 135 include nodes of the first negative electrode leads N1 and the second positive electrode leads P2, nodes of the third negative electrode leads N3 and the fourth positive electrode leads P4, nodes of the fifth negative electrode leads N5 and the sixth positive electrode leads P6, nodes of the seventh negative electrode leads N7 and the eighth positive electrode leads P8, nodes of the ninth negative electrode leads N9 and the tenth positive electrode leads P10, nodes of the eleventh negative electrode leads N11 and the twelfth positive electrode leads P12, nodes of the thirteenth negative electrode leads N13 and the fourteenth positive electrode leads P14, and nodes of the fifteenth negative electrode leads N15 and the sixteenth positive electrode leads P16.

The second integrated circuit 135 may be connected to the above-described nodes through the plurality of second wires 139.The plurality of second wires 139 may be configured to be electrically connected to the second integrated circuit 135.Each of the plurality of second wires 139 may be configured to be electrically connected to corresponding one among the first negative electrode leads N1, the second positive electrode leads P2, the third negative electrode leads N3, the fourth positive electrode leads P4, the fifth negative electrode leads N5, the sixth positive electrode leads P6, the seventh negative electrode leads N7, the eighth positive electrode leads P8, the ninth negative electrode leads N9, the tenth positive electrode leads P10, the eleventh negative electrode leads N11, the twelfth positive electrode leads P12, the thirteenth negative electrode leads N13, the fourteenth positive electrode leads P14, the fifteenth negative electrode leads N15, and the sixteenth positive electrode leads P16.

Each of the plurality of second wires 139 may be configured to electrically connect one of the positive electrode leads P1 to P16 of each of the plurality of battery cells 111 and the negative electrode leads N1 to N16 of each of the plurality of battery cells 111 to the second integrated circuit 135.Each of the plurality of second wires 139 may be in contact with corresponding one among the second positive electrode leads P2, the fourth positive electrode leads P4, the sixth positive electrode leads P6, the eighth positive electrode leads P8, the tenth positive electrode leads P10, the twelfth positive electrode leads P12, and the fourteenth positive electrode leads P14.

Each of the plurality of second wires 139 may be configured to be electrically connected to corresponding one among the plurality of second contact pads 137 connected to a circuit pattern of the second integrated circuit 135.Each of the plurality of second wires 139 may be in contact with corresponding one among the plurality of second contact pads 137.Each of the plurality of second contact pads 137 may include, for example, nickel. Each of the plurality of second contact pads 137 may prevent damage to the second integrated circuit 135 when the plurality of second wires 139 are formed.

The second insulation cover 160 may be coupled to the second bus bar frame 131.The second insulation cover 160 may cover the first negative electrode leads N1, the second positive electrode leads P2, the third negative electrode leads N3, the fourth positive electrode leads P4, the fifth negative electrode leads N5, the sixth positive electrode leads P6, the seventh negative electrode leads N7, the eighth positive electrode leads P8, the ninth negative electrode leads N9, the tenth positive electrode leads P10, the eleventh negative electrode leads N11, the twelfth positive electrode leads P12, the thirteenth negative electrode leads N13, the fourteenth positive electrode leads P14, the fifteenth negative electrode leads N15, and the sixteenth positive electrode leads P16 to prevent undesired short circuit between them and an external element. The second insulation cover 160 may include an insulating material.

The first bus bar assembly 120 and the second bus bar assembly 130 may be connected to each other by the FFC assembly 140.The FFC assembly 140 may be on the cell stack 110.The FFC assembly 140 may be a passage for transmitting a voltage of each of certain nodes of the cell stack 110 sensed by the second bus bar assembly 130.The FFC assembly 140 may be connected to the first and second integrated circuits 125 and 135 through a first receiving portion 125CR of the first integrated circuit 125 and a second receiving portion 135CR of the second integrated circuit 135.

The battery assembly 100 may be mounted in a battery pack, and the battery pack may include a BMS. The BMS may be configured to monitor and balance the battery assembly 100, based on a voltage of each of the nodes of the cell stack 110 measured by the first and second direct circuits 125 and 135.The balancing of the battery assembly 100 is an operation of reducing a deviation between the plurality of battery banks BNK1 to BNK16.

### (Second Embodiment)

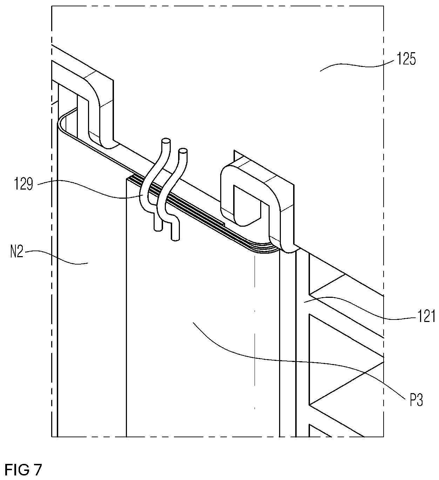

FIG. 7 illustrates a part corresponding to FIG. 5.

Referring to FIG. 7, the plurality of first contact pads 127 (see FIG. 5) may be omitted unlike in FIG. 5.In this case, each of the plurality of first wires 129 may be in direct contact with the first integrated circuit 125.According to example embodiments, the plurality of first contact pads 127 (see FIG. 5) are omitted, thus further improving energy density of the battery assembly 100 (see FIG. 1).

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery assembly comprising:
a cell stack comprising first to third pouch type battery cells, wherein the first pouch type battery cell includes a first positive electrode lead and a first negative electrode lead, the second pouch type battery cell includes a second positive electrode lead and a second negative electrode lead, and the third pouch type battery cell includes a third positive electrode lead and a third negative electrode lead; and
a first bus bar assembly coupled to the cell stack,
wherein the first bus bar assembly includes:
a first bus bar frame;
a first bus bar coupled to the first positive electrode lead and configured to output a voltage of the cell stack;
a first integrated circuit coupled to the first bus bar frame, and configured to measure electric potentials of the second negative electrode lead and the third positive electrode lead; and
a first wire configured to be electrically connected to the first integrated circuit and the third positive electrode lead.

2. The battery assembly of claim 1, further comprising a first contact pad on the first integrated circuit, the first contact pad being in contact with the first wire.

3. The battery assembly of claim 2, wherein the first contact pad includes nickel (Ni).

4. The battery assembly of claim 1, wherein the first integrated circuit is in contact with the first wire.

5. The battery assembly of claim 1, wherein the first wire is in contact with the third positive electrode lead.

6. The battery assembly of claim 1, wherein the first positive electrode lead, the second negative electrode lead, and the third positive electrode lead are on a front surface of the cell stack, and
wherein the first bus bar frame covers the front surface of the cell stack.

7. The battery assembly of claim 1, further comprising a second bus bar assembly coupled to the cell stack,
wherein the second bus bar assembly includes:
a second bus bar frame;
a second integrated circuit coupled to the second bus bar frame, and configured to measure electric potentials of the first negative electrode lead and the second positive electrode lead; and
a second wire configured to be electrically connected to the second integrated circuit and the second positive electrode lead.

8. The battery assembly of claim 7, further comprising a second contact pad on the second integrated circuit, the second contact pad being in contact with the second wire.

9. The battery assembly of claim 7, wherein the second integrated circuit is in contact with the second wire.

10. The battery assembly of claim 7, wherein the second wire is in contact with the second positive electrode lead.

11. The battery assembly of claim 7, wherein the first negative electrode lead, the second positive electrode lead, and the third negative electrode lead are on a rear surface of the cell stack, and
wherein the second bus bar frame covers the rear surface of the cell stack.

12. A battery assembly comprising:
a cell stack comprising a plurality of pouch type battery cells, wherein each of the plurality of pouch type battery cells includes a positive electrode lead and a negative electrode lead; and
a first bus bar assembly coupled to the cell stack,
wherein the first bus bar assembly includes:
a first bus bar frame;
a first integrated circuit coupled to the first bus bar frame, and configured to measure an electric potential of one of the positive electrode lead and the negative electrode lead of each of the plurality of pouch type battery cells; and
a plurality of first wires each configured to electrically connect one of the positive electrode lead and the negative electrode lead of each of the plurality of pouch type battery cells to the first integrated circuit.

13. The battery assembly of claim 12, further comprising a plurality of first contact pads on the first integrated circuit, the plurality of first contact pads being in contact with the plurality of first wires.

14. The battery assembly of claim 12, wherein the first integrated circuit is in contact with the plurality of first wires.

15. The battery assembly of claim 12, wherein each of the plurality of first wires is in contact with the positive electrode lead of one of the plurality of pouch type battery cells.
